# EUROPÄISCHE PATENTANMELDUNG

(11) **EP 0 980 793 A2**
(43) Veröffentlichungstag der Anmeldung: **23.02.2000**
(21) Anmeldenummer: 99114462.7
(22) Anmeldetag: 23.07.1999
(51) Int. Cl.: B60R 16/02

(54) **Schaltungsanordnung und Verfahren zur Abschaltung einer elektrischen Energiequelle eines Fahrzeuges**

(30) Priorität: 19.08.1998 DE 19837585
(71) Anmelder: DaimlerChrysler AG, 70567 Stuttgart (DE)
(72) Erfinder: Bitsche, Otmar, 70329 Stuttgart (DE); Streit, Robert, 3171 Oberwangen (CH)

(57) **Zusammenfassung**

Die vorliegende Erfindung betrifft eine Schaltungsanordnung zur Abschaltung einer elektrischen Energiequelle eines Fahrzeuges, bei der zwei Schaltelemente vorgesehen sind, die in der Nähe der elektrischen Energiequelle in den beiden Leitungen angebracht sind, über die Verbraucher des Fahrzeuges von der elektrischen Energiequelle mit elektrischer Energie versorgt werden, wobei mittels dieser beiden Schaltelemente im Fehlerfall eine allpolige Abschaltung realisiert wird, indem im Fehlerfall beide Schaltelemente geöffnet werden, wobei eines der beiden Schaltelemente den Betriebsschalter darstellt, mittels dem die elektrische Energiequelle im Normalbetrieb abschaltbar ist. Weiterhin betrifft die Erfindung ein Verfahren zur Abschaltung einer elektrischen Energiequelle mit dieser Schaltungsanordnung, wobei die Abschaltung bei einem elektromotorisch betriebenen Fahrzeug im Normalbetrieb erfolgt, indem der Antriebsstrom des Elektromotors zunächst herabgeregelt wird und indem der Betriebsschalter geöffnet wird, wenn der Antriebsstrom herabgeregelt ist.

## Beschreibung

Die vorliegende Erfindung betrifft eine Schaltungsanordnung und ein Verfahren zur Abschaltung einer elektrischen Energiequelle eines Fahrzeuges nach dem Oberbegriff der Patentansprüche 1 und 3, wonach zwei Schaltelemente vorgesehen sind, die in der Nähe der elektrischen Energiequelle in den beiden Leitungen angebracht sind, über die Verbraucher des Fahrzeuges von der elektrischen Energiequelle mit elektrischer Energie versorgt werden, wobei mittels dieser beiden Schaltelemente im Fehlerfall eine allpolige Abschaltung realisiert wird, indem im Fehlerfall beide Schaltelemente geöffnet werden.

Die Schaltungsanordnung ist insbesondere anwendbar auf elektromotorisch betriebene Fahrzeuge wie Elektro- oder Hybridfahrzeuge mit einer Akkumulatoranordnung (Traktionsbatterie) oder einer Brennstoffzelle als elektrische Energiequelle.

Eine derartige Schaltungsanordnung ist beispielsweise aus der WO 95/01887 bekannt, nach der eine allpolige Trennung von einer Akkumulatoranordnung sowie von einem Generator vorgesehen ist. Diese allpolige Trennung erfolgt im Fehlerfall, d.h. bei einem erkannten Unfall, wie auch bei einer Abschaltung der Akkumulatoranordnung im Normalbetrieb.

Eine derartige allpolige Abschaltung ist ebenfalls bekannt aus der JP-A-07059202.

Demgegenüber ist es die Aufgabe der vorliegenden Erfindung, den Aufwand an Bauteilen zu begrenzen und dabei die sicherheitsbedingten Abschaltfunktionen beizubehalten.

Erfindungsgemäß wird dies durch eine Schaltungsanordnung nach Anspruch 1 erreicht, bei der eines der beiden Schaltelemente den Betriebsschalter darstellt, mittels dem die elektrische Energiequelle im Normalbetrieb abschaltbar ist.

Dadurch wird vorteilhaft erreicht, daß nur eines der beiden Schaltelemente so ausgelegt sein muß, daß mit diesem Schaltelement der Abschaltvorgang im Normalbetrieb, das heißt häufiger, realisiert werden kann, ohne daß dabei das Schaltelement zerstört wird, wobei der Schaltvorgang in diesem Schaltelement wegen dessen häufigerer Betätigung nicht zu aufwendig sein soll. Das andere Schaltelement wird nur betätigt bei einem Unfall oder einer Notausschaltung. Da dieser Schaltvorgang seltener vorkommt, kann bei diesem Schaltelement in Kauf genommen werden, daß der Schaltvorgang selbst aufwendiger ist oder gegebenenfalls, daß ein Verschleiß in dem Schaltelement auftritt wegen eines Abbrennens von Elektroden oder Kontakten.

Aus der US-PS 3,842,228 ist es bekannt, ein Schaltelement so auszubilden, daß eine Platte aus elektrisch nicht leitendem Material zwischen die beiden Kontakte eines elektrischen Schalters geschoben wird, um die elektrischen Kontakte zu trennen. Einer dieser beiden Kontakte ist federelastisch gelagert. Durch das Zwischenschieben der Platte wird dieser elektrische Kontakte gegen die Kraft der Feder von dem anderen Kontakt getrennt. Insbesondere bei großen elektrischen Spannungen kommt es in einem Schalter bei der Trennung der Kontakte zu einem Funkenüberschlag. Indem die Plane zwischen die beiden Kontakte geschoben wird, wird dieser Funkenüberschlag abgeschnitten, weshalb diese Ausbildung des Schaltelementes auch als "Löschung des Funkenüberschlages durch eine Guillotine" beschrieben wird. Die Betätigung dieses Schaltelementes stellt einen vergleichsweise großen Aufwand dar.

Dieses Schaltelement eignet sich aber zum Schalten großer Ströme, so daß eine solche Ausgestaltung eines Schaltelementes als Notausschalter in der Schaltungsanordnung eingesetzt werden kann, wie dies im Zusammenhang mit Anspruch 2 erläutert wird.

Im Zusammenhang mit dem Schalten großer Ströme ist es weiterhin bekannt (DE 44 15 794 A1) in einer Schaltungsanordnung einen Schalter, der in Reihe zum Verbraucher sowie einem Steuer- bzw. Regelelement zur Steuerung bzw. Regelung der Leistungsaufnahme des elektrischen Verbrauchers liegt, bei der Abschaltung erst dann zu öffnen, wenn mittels des Regelementes der Laststrom herabgeregelt worden ist. Ebenso wird dieser Schalter geschlossen, bevor mittels des Regelelementes die Stromaufnahme des Verbrauchers "hochgefahren" wird. Durch diese Maßnahmen soll der Schalter entlastet werden, indem die mittels des Schalters zu schaltenden Ströme begrenzt werden.

In Verbindung mit einem solchen Steuer- bzw. Regelelement kann also der Betriebsschalter entsprechend einfach gestaltet werden. Es kann ein Schaltschütz verwendet werden, dessen mechanische Beanspruchung im Normalbetrieb begrenzt wird.

Bei der Schaltungsanordnung nach Anspruch 2 bildet das andere der beiden Schaltelemente einen Notausschalter, bei dem bei der Trennung von dessen Kontakten ein Element aus einem nichtleitenden Material zwischen die beiden Kontakte geschoben wird.

Dieses Element kann wieder zurückbewegt werden, so daß über die beiden Kontakte wieder eine elektrische Verbindung herstellbar ist. Auch wenn der Schaltvorgang mittels dieses Notausschalters vergleichsweise aufwendig ist, erweist es sich beispielsweise gegenüber der Verwendung einer Schmelzsicherung oder pyrotechnischen Sicherung als vorteilhaft, daß der Notausschalter nach einem einmaligen Ansprechen, das heißt Öffnen, wieder verwendet werden kann. Gegenüber einer Schmelzsicherung erweist es sich weiterhin als vorteilhaft, daß der Notausschalter auch auslösen kann, wenn die Akkumulatoranordnung praktisch leer ist.

Mit dieser Ausgestaltung eines Schaltelementes lassen sich auch größere Ströme sicher schalten, was gerade im Fehlerfall von Bedeutung ist. Es ist dann also nicht notwendig, beide Schalter zum dauerhaften Schalten auf dieses Schalten großer Ströme auszulegen. Für den Betriebsschalter kann ein Schaltschütz vorgesehen werden, das im Fehlerfall beispielsweise erst nach der Betätigung des Notausschalters geöffnet wird. Da aber andererseits der Notausschalter selten betätigt wird, kann hingenommen, daß sich dieser Schaltvorgang etwas aufwendiger darstellt.

Bei dem Verfahren nach Anspruch 3 wird der Notausschalter geöffnet, wenn bei einem Abschaltvorgang im Normalbetrieb der Betriebsstrom nach einer gewissen ersten Zeitspanne t₁ nach Einleiten des Abschaltvorganges größer ist als ein erster Schwellwert oder wenn bei einem Abschaltvorgang im Normalbetrieb der Betriebsschalter überhaupt nicht öffnet.

Durch dieses Öffnen des Notausschalters kann eine Abschaltung der Akkumulatoranordnung erreicht werden, wenn eine Störung eingetreten ist, daß der Betriebsschalter überhaupt nicht öffnet oder daß das Abregeln des Laststromes vor dem Ausschalten durch den Betriebsschalter nicht funktioniert.

Diese beiden Fehlerfälle können durch entsprechende Strommessungen erkannt werden. Eine Strommessung erfolgt zum Zeitpunkt T₁, um einen Fehler beim Abregeln zu erkennen. Dieser Fehler wird erkannt, wenn der Betriebsstrom zu diesem Zeitpunkt größer ist als der erste Schwellwert, beispielsweise 20 A. Weiterhin erfolgt eine Strommessung, nachdem der Betriebsschalter zum Öffnen angesteuert worden ist. Ein Fehler wird in dieser Situation erkannt, wenn der Betriebsstrom größer ist als 0.

Der erste Schwellwert kann beispielsweise in der Größenordnung von einigen zehn Ampère liegen und beispielsweise 20 A betragen.

In diesem Fall wird der größere Laststrom nach Ablauf der Zeitspanne t₁ vorteilhaft durch den Notausschalter ausgeschaltet, wenn dieser für die Abschaltung größerer Ströme und damit auch für die Abschaltung des in diesem Betriebszustand vorliegenden Laststromes ausgelegt ist. Dies ist beispielsweise der Fall, wenn der Notausschalter aufgebaut ist wie in Anspruch 2 beschrieben.

Bei dem Verfahren nach Anspruch 4 erfolgt die Abschaltung der Akkumulatoranordnung bei einem elektromotorisch betriebenen Fahrzeug im Normalbetrieb, indem der Antriebsstrom des Elektromotors zunächst herabgeregelt wird und indem der Betriebsschalter geöffnet wird, wenn der Antriebsstrom herabgeregelt ist.

Dadurch werden vorteilhaft die Betriebsströme minimiert, die von dem Betriebsschalter geschaltet werden müssen. Dadurch wird der Betriebsschalter mechanisch weniger stark belastet. Dies erweist sich insbesondere bei den vergleichsweise großen Betriebsströmen eines elektromotorisch betriebenen Fahrzeuges als vorteilhaft.

Bei dem Verfahren nach Anspruch 5 werden der Notausschalter sowie der Betriebsschalter geöffnet, wenn der Betriebsstrom einen bestimmten zweiten Schwellwert überschreitet, oder wenn von einer Sensorik ein Unfall erkannt wird, bei dem der Airbag ausgelöst wurde.

Dabei ist es vorteilhaft, den Notausschalter wegen dessen Eignung zum Schalten großer Ströme zeitlich früher zu schalten als den Betriebsschalter. Vorteilhaft erweist sich, daß infolge der Betätigung beider Schaltelemente eine allpolige Trennung von der Akkumulatoranordnung gegeben ist, so daß die Feuergefahr bei einem Unfall minimiert ist.

Der zweite Schwellwert ist größer gewählt als der erste Schwellwert und kann bei einem elektromotrisch betriebenen Fahrzeug in der Größenordnung von einigen hundert Ampère liegen und beispielsweise 300 A betragen.

Bei dem Verfahren nach Anspruch 6 wird bei einer Abschaltung im Normalbetrieb der Betriebsschalter nach Ablauf einer Zeitspanne t₂ nach Einleiten des Abschaltvorganges geöffnet.

Der Abregelvorgang des Laststromes ist so ausgelegt, daß Laststrom nach Ablauf der Zeitspanne t₁ kleiner ist als der erste Schwellwert. Ein Strom, der betragsmäßig diesem Schwellwert entspricht, kann von dem Betriebsschalter problemlos geschaltet werden. Indem also mit dem Öffnen des Betriebsschalters eine Zeitspanne t₂ gewartet wird, die größer ist als die Zeitspanne t₁, so ist im normalen Betrieb beim Öffnen des Betriebsschalters der Antriebsstrom kleiner als der erste Schwellwert. Wenn der Abregelvorgang gestört ist, wird nach Ablauf der Zeitspanne t₁ der Notausschalter geöffnet, wenn der Antriebsstrom nach Ablauf dieser Zeitspanne t₁ größer ist als der erste Schwellwert. Der Notausschalter ist zum Schalten dieser größeren Ströme ausgelegt. Nach dem Öffnen des Notausschalters wird der Stromfluß unterbrochen, so daß beim Öffnen des Betriebsschalters zum Zeitpunkt t₂ kein Strom mehr fließt, so daß der Betriebsschalter bei diesem Schaltvorgang nicht belastet wird.

Bei dem Verfahren nach Anspruch 7 wird bei einer Abschaltung im Normalbetrieb der Betriebsschalter geöffnet, wenn der Antriebsstrom kleiner ist als der zweite Schwellwert.

Bei dieser Ausgestaltung des Verfahrens erfolgt eine Messung des Antriebsstromes, so daß der Betriebsschalter zeitgerecht dann geöffnet wird, wenn der Antriebsstrom entsprechend weit abgeregelt ist.

In vorteilhafter Weiterbildung ist es auch möglich, in einer Steuereinheit zu speichern, wenn der Notausschalter geöffnet hat bzw. wie häufig der Notausschalter geöffnet hat. Es kann dann die Belastung und Abnutzung des Notausschalters gespeichert werden. Ebenso kann gespeichert werden, wie oft der Betriebsschalter geöffnet wurde, ohne daß der Antriebsstrom kleiner war als der erste Schwellwert. Dadurch kann auch eine Aussage über die Belastung und Abnutzung des Betriebsschalters getroffen werden.

Bei der erfindungsgemäßen Schaltungsanordnung wie auch dem erfindungsgemäßen Verfahren erweist es sich als vorteilhaft, daß die Schaltungsanordnung zu einem vergleichsweise niedrigen Preis darstellbar ist. Bei der Fahrzeugmontage ist die elektrische Energiequelle allpolig vom Rest des Fahrzeuges getrennt.

Ebenso ist es auch möglich eine Abschaltung über den Notausschalter wie auch den Betriebsschalter vorzusehen, wenn ein Isolationsfehler festgestellt wird.

Vorteilhaft wird ein erkannter Fehlerfall dem Fahrzeugführer angezeigt. Der Fahrzeugführer kann dann gegebenenfalls zur Kenntnis nehmen, daß er die Werkstatt aufsuchen muß.

Ein Ausführungsbeispiel der Erfindung ist in der Zeichnung näher dargestellt. Es zeigt dabei im einzelnen:
- Fig. 1:: eine Prinzipdarstellung einer Schaltungsanordnung nach der Erfindung,
- Fig. 2:: ein Ausführungsbeispiel der Ausgestaltung eines Notausschalters in Seitenansicht (Figur 2a) und in Draufsicht (Figur 2b) sowie
- Fig. 3:: ein Ausführungsbeispiel einer Schaltungsanordnung zur Durchführung der Erfindung.

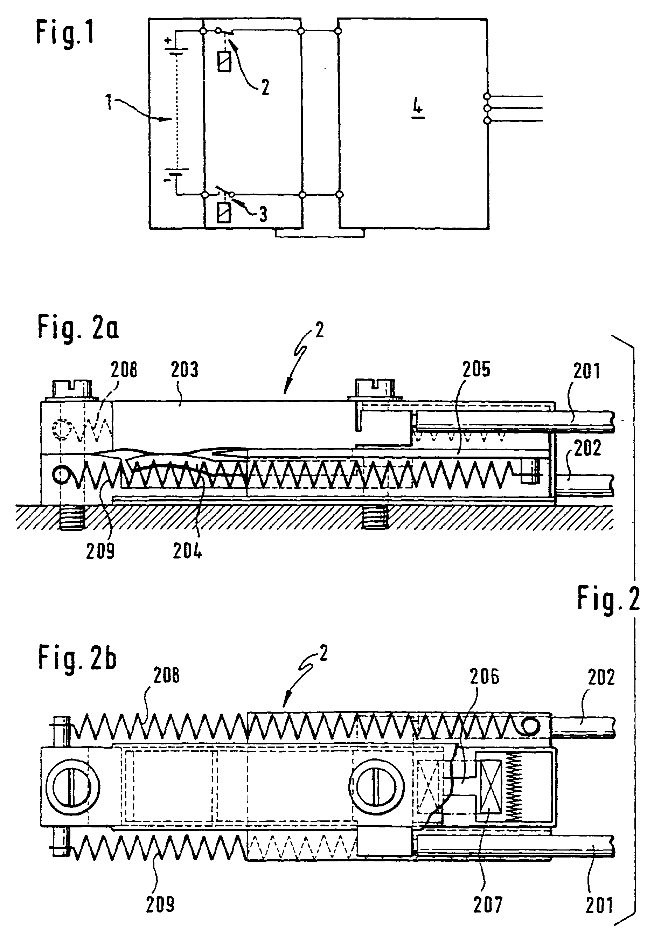

Figur 1 zeigt eine Prinzipdarstellung einer Schaltungsanordnung nach der Erfindung. Eine elektrische Energiequelle 1 ist über zwei Schaltelemente 2 und 3 mit einer Steuer- bzw. Regeleinheit 4 verbunden. Von dieser Regeleinheit 4 wird in dem gezeigten Ausführungsbeispiel der Antriebsstrom eines Elektromotors eingestellt.

In der Darstellung der Schaltungsanordnung gemäß Figur 1 ist das Schaltelement 2 ein Notausschalter und das Schaltelement 3 der Betriebsschalter.

Figur 2 zeigt ein Ausführungsbeispiel für die Ausgestaltung eines Notausschalters 2 im Schnitt der Seitenansicht (Figur 2a) und in Draufsicht (Figur 2b).

Der Notausschalter 2 weist zwei Anschlüsse 201 und 202 auf. Als Kontaktelemente 203 und 204 sind in dem Notausschalter 2 zwei Elemente vorgesehen, von denen eines (204) als Kontaktfeder funktioniert, deren Federspannung in dem gezeigten Ausführungsbeispiel aus einer Blattfederspannung resultiert. Wenn der Notausschalter 2 geschlossen ist, liegen die beiden Kontaktelemente 203 und 204 aneinander an.

Wenn die beiden Kontaktelemente 203 und 204 getrennt werden sollen, wird zwischen die beiden Kontaktelemente 203 und 204 eine Platte 205 aus elektrisch nicht leitendem Material geschoben. Indem die Kontaktelemente 203 und 204 durch das Zwischenschieben der Platte 205 getrennt werden, wird ein elektrischer Funkenüberschlag, der beim Trennen der Kontaktelemente 203 und 204 auftreten könnte, sofort gelöscht.

Die Platte 205 aus elektrisch nicht leitendem Material wird in der in Figur 2 gezeigten Stellung gehalten, indem diese Platte 205 mit einem Auslösebügel 206 verrastet ist. Wenn die Kontaktelemente 203 und 204 des Notausschalters 2 getrennt werden sollen, wird der Auslösebügel 206 durch den Auslösemagneten 207 in eine Stellung bewegt, daß dieser die Platte 205 nicht mehr zurückhält. Die Platte 205 wird dann infolge der Kraft der Federn 208 und 209 derart bewegt, daß die Kontaktelemente 203 und 204 getrennt werden.

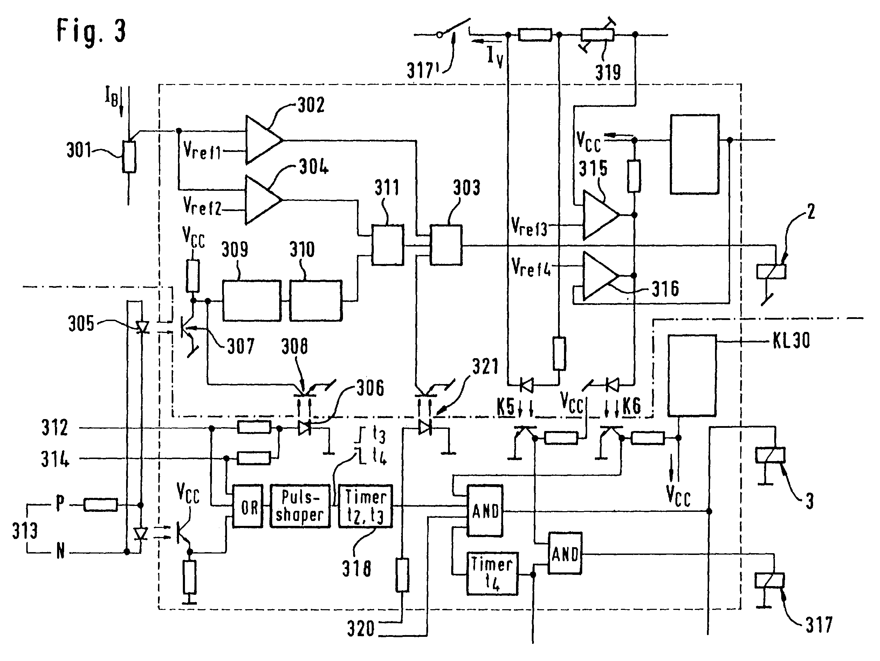

Figur 3 zeigt ein Ausführungsbeispiel einer Schaltungsanordnung zur Durchführung des erfindungsgemäßen Verfahrens, bei dem der Antrieb eines Elektrofahrzeuges mittels der Schaltung zu- bzw. abgeschaltet werden soll.

Die Schaltung besteht aus zwei völlig getrennten Systemen, von denen der Teil der Schaltung oberhalb der strichpunktierten Linie auf Traktionspotential liegt und auch mit der Traktionsspannung gespeist wird, während der untere Teil der Schaltung (Ansteuerung des Betriebsschalters, der hier als Hauptschütz ausgebildet ist, sowie des Vorladerelais) auf Bordnetzpotential steht und auch von Klemme 30 gespeist wird (Bordnetz, Dauerplus).

Es ist ein Shunt-Widerstand 301 vorgesehen, mittels dem der Betriebsstrom gemessen wird über den Spannungsabfall an diesem Widerstand.

Über den Komparator 302 und das ODER-Glied 303 kommt es zu einem Öffnen des Notausschalters, wenn der Betriebsstrom einen bestimmten ersten Schwellwert übersteigt, der beispielsweise 300 A betragen kann.

Über den Komparator 304 sowie die Leuchtdioden 305 und 306 in Verbindung mit den optischen Schaltelementen 307 und 308, mittels denen ein Pulsshaper 309 sowie ein Timer 310 mit der Zeitkonstanten t₁ gestartet werden können, wird überprüft, ob nach der Zeitspanne t₁ der Betriebsstrom unter einen zweiten Schwellwert gesunken ist, der beispielsweise 20 A betragen kann. Dazu werden das Ausgangssignal des Timers 310 sowie des Komparators 304 einem UND-Glied 311 zugeführt, dessen Ausgang wiederum dem ODER-Glied 303 zugeführt wird. Wenn der Betriebsstrom nach Ablauf der Zeitkonstanten t₁ nicht unter den zweiten Schwellwert gesunken ist, wird der Notausschalter 2 geöffnet.

Weiterhin besteht entsprechend der Darstellung über die Bezugszeichen 320 und 321 die Möglichkeit einer Abschaltung, die durch die Software veranlaßt wird. Dadurch kann eine Abschaltung erfolgen, wenn der Betriebsschalter nicht öffnet oder wenn von einer Sensorik ein Unfall erkannt worden ist.

Bei der Einschaltung schalten bei Anliegen der Spannung an Klemme 15 (312), 230 V_{ac} (313) oder der Aktivierung des Pilotkontaktes zur Schnelladung (314) das Vorladerelais 317, 317' und der Timer 1 ein. Sobald das Vorladerelais 317, 317' zieht, hält es sich über den Optokoppler K5 selbst so lange, bis der Strom durch den PTC-Vorladewiderstand 319 abgeklungen ist auf einen Wert, den das Vorladerelais 317, 317' ausschalten kann. Damit der als Hauptschütz ausgebildete Betriebsschalter 3 aufziehen kann, muß einerseits die Traktionsspannung nach dem Vorladerelais 317, 317' einen Mindestwert aufweisen und andererseits der Spannungsabfall über dem PTC-Widerstand 319 einen bestimmten Wert unterschreiten, was durch die Komparatoren 315 und 316 bewerkstelligt wird. In der in Figur 3 dargestellten Version bleibt das Vorladerelais 317, 317' dauernd angezogen, während der Betriebsschalter 3 eingeschaltet ist.

Beim Ausschalten muß beachtet werden, daß eine zuverlässige und redundante Not-Aus-Funktion erfüllt sein muß. Trotz Not-Aus-Funktion soll jedoch der Notausschalter 2 nicht öfter als notwendig ausgelöst werden. Dies wird durch die zwei redundanten Abschaltsysteme erreicht.

Sind das 230 V_{ac}-Netz bzw. Schnelladenetz sowie Klemme 15 aus (312, 313, 314), dann erfolgt ein Start der Timer 310 und 318 über zwei redundante Pfade. Im Regelfall wird der Batteriestrom im Antriebsstromrichter innerhalb von t₁ auf einen Wert kleiner als 20 A heruntergefahren, so daß der Notausschalter 2 nicht ausgelöst wird. Der Betriebsschalter 3 öffnet dann spätestens nach Ablauf von t₂ (t₂ > t₁) oder durch die Software abgeschaltet auch früher (z. B. nach Feststellen von I_{Batt} < 20 A).

Kann der Stromrichter den Batteriestrom nicht unter 20 A hinunterfahren, dann löst nach Ablauf von t₁ der Notausschalter 2 aus und anschließend der Betriebsschalter 3 ebenfalls. Der Kurzschlußstrom wird dabei durch den Notausschalter 2 getrennt. Die Software signalisiert vorteilhaft diesen Fall und speichert lebenslänglich, daß eine Trennung stattgefunden hat, beispielsweise zu Zwecken der Statistik oder um die Beanspruchung des Schalters abschätzen zu können.

Wenn der Notausschalter 2 defekt ist, trennt der Betriebsschalter 3 den Strom nach Ablauf von t₂. Die Software signalisiert diesen Fall vorteilhaft und speichert ebenfalls, daß eine Trennung stattgefunden hat.

Wenn der Betriebsschalter 3 defekt ist, öffnet der Notausschalter 2 vor dem Betriebsschalter 3, wenn ein Strom größer als 20 A vorliegt. Liegt ein Strom kleiner als 20 A vor, so erfolgt durch die Hardware a priori keine Abschaltung. Der Notausschalter 2 wird in diesem Fall durch die Software ausgelöst.

Die erfindungsgemäße Schaltungsanordnung sowie das erfindungsgemäße Verfahren eignen sich zur Anwendung in Elektromobilen, aber auch in anderen kostenkritischen Elektrofahrzeugen mit hohem Sicherheitsstandard wie z.B. Hubstapler.

## Patentansprüche

1. Schaltungsanordnung zur Abschaltung einer Akkumulatoranordnung (1) eines Fahrzeuges, bei der zwei Schaltelemente (2, 3) vorgesehen sind, die in der Nähe der Akkumulatoranordnung (1) in den beiden Leitungen angebracht sind, über die Verbraucher des Fahrzeuges von der Akkumulatoranordnung (1) mit elektrischer Energie versorgt werden, wobei mittels dieser beiden Schaltelemente (2, 3) im Fehlerfall eine allpolige Abschaltung realisiert wird, indem im Fehlerfall beide Schaltelemente (2, 3) geöffnet werden,
dadurch gekennzeichnet, daß eines der beiden Schaltelemente (3) den Betriebsschalter (3) darstellt, mittels dem die Akkumulatoranordnung (1) im Normalbetrieb abschaltbar ist.

2. Schaltungsanordnung nach Anspruch 1,
dadurch gekennzeichnet, daß das andere der beiden Schaltelemente (2) einen Notausschalter (2) bildet, bei dem bei der Trennung von dessen Kontakten (203, 204) ein Element (205) aus einem nichtleitenden Material zwischen die beiden Kontakte (203, 204) geschoben wird.

3. Verfahren zur Abschaltung einer Akkumulatoranordnung mit einer Schaltungsanordnung nach Anspruch 1 oder 2,
dadurch gekennzeichnet, daß der Notausschalter (2) geöffnet wird, wenn bei einem Abschaltvorgang im Normalbetrieb der Betriebsstrom nach einer gewissen ersten Zeitspanne t₁ nach Einleiten des Abschaltvorganges größer ist als ein erster Schwellwert (304, 309, 310) oder wenn bei einem Abschaltvorgang im Normalbetrieb der Betriebsschalter überhaupt nicht öffnet.

4. Verfahren nach Anspruch 3,
dadurch gekennzeichnet, daß die Abschaltung bei einem elektromotorisch betriebenen Fahrzeug im Normalbetrieb erfolgt, indem der Antriebsstrom des Elektromotors zunächst herabgeregelt wird und indem der Betriebsschalter (3) geöffnet wird, wenn der Antriebsstrom herabgeregelt ist (318).

5. Verfahren nach Anspruch 3 oder 4,
dadurch gekennzeichnet, daß der Notausschalter (2) sowie der Betriebsschalter (3) geöffnet werden, wenn der Betriebsstrom einen bestimmten zweiten Schwellwert (302) überschreitet, oder wenn von einer Sensorik ein Unfall erkannt wird, bei dem der Airbag ausgelöst wurde.

6. Verfahren nach einem der Ansprüche 3 bis 5,
dadurch gekennzeichnet, daß bei einer Abschaltung im Normalbetrieb der Betriebsschalter (3) nach Ablauf einer Zeitspanne t₂ nach Einleiten des Abschaltvorganges geöffnet wird (318).

7. Verfahren nach einem der Ansprüche 3 bis 5,
dadurch gekennzeichnet, daß bei einer Abschaltung im Normalbetrieb der Betriebsschalter (3) geöffnet wird, wenn der Antriebsstrom kleiner ist als der zweite Schwellwert.
